# EUROPÄISCHE PATENTSCHRIFT

(11) **EP 0 970 159 B1**
(45) Veröffentlichungstag und Bekanntmachung des Hinweises auf die Patenterteilung: **02.01.2002**
(21) Anmeldenummer: 98912503.4
(22) Anmeldetag: 25.03.1998
(51) Int. Cl.: C09K 3/30, C09D 11/00

(54) **ZUSAMMENSETZUNG IN FORM EINER SPRAYDOSENFÜLLUNG**
COMPOSITION IN THE FORM OF A SPRAY CAN FILLING
COMPOSITION SOUS FORME DE CHARGE POUR PULVERISATEUR

(30) Priorität: 26.03.1997 DE 29705413 U; 12.11.1997 DE 29720017 U
(43) Veröffentlichungstag der Anmeldung: 12.01.2000
(73) Patentinhaber: Hangleiter, Hans Michael, 64853 Otzberg 1 (DE)
(72) Erfinder: Hangleiter, Hans Michael, 64853 Otzberg 1 (DE)
(74) Vertreter: Weber-Bruls, Dorothée, Dr.
(86) Internationale Anmeldenummer: EP9801752
(87) Internationale Veröffentlichungsnummer: WO9842794

(56) Entgegenhaltungen:
- DATABASE WPI Section Ch, Week 8206 Derwent Publications Ltd., London, GB; Class C03, AN 82-10632E XP002070701 & JP 56 167 601 A (KAO SOAP CO LTD)
- DATABASE WPI Section Ch, Week 8221 Derwent Publications Ltd., London, GB; Class A82, AN 82-42854E XP002070702 & JP 57 064 601 A (MIKASA KAGAKU KOGYO KK)
- PATENT ABSTRACTS OF JAPAN vol. 013, no. 394 (C-631), 31.August 1989 & JP 01 139659 A (MAAKUTETSUKU KK), 1.Juni 1989,
- DATABASE WPI Section Ch, Week 8951 Derwent Publications Ltd., London, GB; Class G02, AN 89-371081 XP002070703 & CN 1 030 780 A (SUN GUOHUA)

## Beschreibung

Die Erfindung betrifft eine Zusammensetzung in Form einer Spraydosenfüllung, für ein Bedrucken, Bemalen oder Besprühen.

Einerseits werden zur Zeit bei der Werbung für kurzfristig bevorstehende Ereignisse häufig Wandflächen von Baukörpern oder Trägern mit Plakaten versehen, die nach dem beworbenen Ereignis zeitraubend und kostenaufwendig entfernt werden müssen. Andererseits werden vor allem im Baubereich auf die Rohbaukörper häufig Zeichen und Markierungen für nachfolgende handwerkliche Arbeiten angebracht, die nach Ausführung der Arbeiten als unschöne Verunzierungen zurückbleiben oder unter Zeit- und Kosteneinsatz umständlich entfernt werden müssen.

Die JP 57064601 A beschreibt ein Aerosolgemisch zur Abwehr von Tieren, wobei durch Zugabe bestimmter Verbindungen, wie beispielsweise Alkylketone, zu dem Aerosolgemisch die Verdampfung der Duftstoffe verlangsamt werden kann. Als Zusätze werden 3-Hexen-1-ol und Butan in einem Verhältnis von 5:20 genannt.

Aus der JP 56167601 A ist ein Insektizid in Form eines Aerosolgemisches bekannt, das als Zusatz Cyclododekan enthalten kann.

Aufgabe der Erfindung ist es, eine Zusammensetzung in Form einer Spraydosenfüllung, für ein Bedrucken, Bemalen oder Besprühen zu liefern, mittels der ein Auftragen von wasserfesten und witterungsbeständigen Zeichen bzw. Markierungen ermöglicht wird, die nach einer vorherbestimmten Zeitdauer von alleine verschwinden.

Diese Aufgabe wird erfindungsgemäß durch eine Zusammensetzung nach Anspruch 1 gelöst.

Die Unteransprüche 2 bis 10 beschreiben bevorzugte Ausführungsbeispiele für die erfindungsgemäße Zusammensetzung.

Der Erfindung liegt somit die überraschende Erkenntnis zugrunde, daß eine Zusammensetzung aus Cyclododekan einerseits sowie eines Treibgases als Trägermedium andererseits als Füllung von Spraydosen dienen kann, so daß beispielsweise eine Werbebotschaft oder Markierung einfach auf eine Unterlage aufgesprüht werden kann und anschließend, je nach den gewählten Bestandteilen der Zusammensetzung, nach einer vorgegebenen Zeitspanne von beispielsweise einigen Tagen rückstandsfrei von der Unterlage abdampft. Besondere Maßnahmen zum Entfernen der Aufsprühung sind somit nicht erforderlich.

Dabei beträgt der Schmelzpunkt für Cyclododekan ungefähr 60 °C, so daß die erfindungsgemäße Zusammensetzung in einem Temperaturbereich von ungefähr -30 °C bis zu ungefähr 60 °C, abhängig von der konkreten Zusammensetzung, leicht sublimierend und fest ist, und somit zum Bedrucken, Bemalen oder Besprühen geeignet.

Besonders bewährt hat sich eine Zusammensetzung, die bei einer 400 ml Aerosoldose mit 520 ml Bruttoinhalt wie folgt umfaßt ist:

| | |
|---|---|
| Cyclododekan | 130 g = 150,99 ml = 29,04 Vol% von 520 ml |
| Propan/Butan 4,8 bar | 138 g = 259,9 ml = 48,25 Vol% von 520 ml |

Um die Zeichen beziehungsweise Markierungen besonders auffallend erscheinen zu lassen empfiehlt sich eine Weiterbildung der Erfindung dahingehend, daß der Zusammensetzung Pigmente, Farbstoffe oder andere farbig erscheinende Substanzen beigegeben werden, die leicht oxidieren, durch chemische Reaktion zerstört werden und/oder aufgrund der Einwirkung von Licht und Wärme sublimieren.

Als derartige Farbstoffe haben sich neben einer großen Zahl von chromophoren Kohlenwasserstoffen folgende Substanzen bewährt.
1. β-Carotin, welches sowohl in Cyclododekan als auch in der erfindungsgemäß verwendeten Treibmischung löslich und durch Licht- sowie durch Luftsauerstoff-Einwirkung zerstörbar ist, wobei vom β-Carotin ein Rückstand in Form eines nicht haftenden, weißlichen Pulvers, das entweder von Hand, mit Lappen oder Besen leicht vom Untergrund abgenommen werden kann oder sogar lediglich von Wind und Regen abgetragen oder abgewaschen wird, zurückbleibt.
2. 1,3-Diphenylisobenzofuran, welches sowohl in Cyclododekan als auch in der erfindungsgemäß verwendeten Treibgasmischung löslich und sehr lichtempfindlich ist, während es gleichzeitig sehr langsam bei Raumtemperatur sublimiert.
3. Azulen (Cyclopentacyclohepten), welches sowohl in Cyclododekan als auch in der erfindungsgemäß verwendeten Treibgasmischung löslich ist und langsam bei Raumtemperatur sublimiert. Eine blaue Markierung ist dabei beispielsweise sowohl in Mischung mit Cyclododekan als auch nur im Treibgas gelöst möglich.
4. Guajazulen (7-isopropyl-1,4 dimethylazulen), welches sowohl in Cyclododekan als auch in der erfindungsgemäß verwendeten Treibgasmischung löslich ist und langsam bei Raumtemperatur sublimiert. Um eine Reaktion mit Luftsauerstoff zu vermeiden, kann ein Antioxidationsmittel zugesetzt werden. Eine blaue Markierung ist dabei beispielsweise sowohl in Mischung mit Cyclododekan als auch nur im Treibgas gelöst möglich.
5. 2-Nitrophenol, welches sowohl in Cyclododekan als auch in der erfindungsgemäß verwendeten Treibgasmischung löslich ist und langsam bei Raumtemperatur sublimiert. Eine gelbe Markierung ist dabei beispielsweise sowohl in Mischung mit einem anderen Kohlenwasserstoff als auch nur im Treibgas gelöst möglich.

Im einzelnen empfiehlt sich ein Gehalt an Farbstoff von 0,1 bis 5 Gewichtsprozent der Treibgasmischung, wobei etwa 1,5 Gewichtsprozent bevorzugt sind.

Die in der vorstehenden Beschreibung und in den Ansprüchen offenbarten Merkmale können sowohl einzeln als auch in jeder beliebigen Kombination für die Verwirklichung der Erfindung in ihren verschiedenen Ausführungsformen wesentlich sein

## Patentansprüche

1. Zusammensetzung in Form einer Spraydosenfüllung, für ein Bedrucken, Bemalen oder Besprühen, mit einem sublimierenden, festen Kohlenwasserstoff in Form von Cyclododekan, der in einem Trägermedium in Form eines Treibgases eingebettet ist, wobei der Dampfdruck des Trägermediums höher als der des Kohlenwasserstoffs ist und 1 bis 60 Gew.-% Cyclododekan sowie 99 bis 40 Gew.-% Treibgas, welches Butan, Propan, Methan, Ethan und/oder eine Mischung aus diesen Stoffen enthält, vorgesehen sind.

2. Zusammensetzung nach Anspruch 1, **dadurch gekennzeichnet, daß** der Kohlenwasserstoff in einem Temperaturbereich von -30°C bis zu seinem Schmelzpunkt, in dem der Dampfdruck des Trägermediums höher als der des Kohlenwasserstoffs ist, sublimierend ist.

3. Zusammensetzung nach Anspruch 1 oder 2, **dadurch gekennzeichnet, daß** der Gehalt an Cyclododekan 30 bis 50 Gew.-% und an Treibgasmischung 70 bis 50 Gew.-% beträgt.

4. Zusammensetzung nach Anspruch 3, **dadurch gekennzeichnet, daß** der Gehalt an Cyclododekan 49 Gew.-% und an Treibgasmischung 51 Gew.-% beträgt.

5. Zusammensetzung nach Anspruch 3 oder 4, **dadurch gekennzeichnet, daß** die Treibgasmischung aus 80 Gew.-% Butan und 20 Gew.-% Propan, bezogen auf die Treibgasmischung, besteht.

6. Zusammensetzung nach einem der vorangehenden Ansprüche, **gekennzeichnet durch** einen Zusatz in Form eines Farbstoffes, der leicht oxidiert und/oder dessen Farbwirkung unter Einwirkung von Licht und/oder Wärme verschwindet.

7. Zusammensetzung nach Anspruch 6, **dadurch gekennzeichnet, daß** der Zusatz zumindest einen chromophoren Kohlenwasserstoff umfaßt.

8. Zusammensetzung nach Anspruch 6, **dadurch gekennzeichnet, daß** der Zusatz β-Carotin, 1,3-Diphenylisobenzofuran, Azulen, Guajazulen und/oder 2-Nitrophenol umfaßt.

9. Zusammensetzung nach Anspruch 8, **dadurch gekennzeichnet, daß** β-Carotin, in einem Gehalt von 0,1 bis 5 Gew.-% der Treibgasmischung vorliegt.

10. Zusammensetzung nach Anspruch 9, **dadurch gekennzeichnet, daß** β-Carotin in einem Gehalt von 1,5 Gew.-% der Treibgasmischung vorliegt.

## Claims

1. A composition in the form of a filling for an aerosol container, for printing, painting or spraying, with a sublimating solid hydrocarbon in the form of cyclododecane, which is embedded in a carrier medium in the form of a propellent gas, the vapour pressure of the carrier medium being higher than that of the hydrocarbon and 1 to 60% by weight of cyclododecane and 99 to 40% by weight of propellent gas containing butane, propane, methane, ethane and/or a mixture of these substances are provided.

2. A composition according to claim 1, **characterised in that** the hydrocarbon is sublimating in a temperature range from -30°c up to its melting point in which the vapour pressure of the carrier medium is higher than that of the hydrocarbon.

3. A composition according to claim 1 or 2, **characterised in that** the cyclododecane content is 30 to 50% by weight and the propellent gas mixture content is 70 to 50% by weight.

4. A composition according to claim 3, **characterised in that** the cyclododecane content is 49% by weight and the propellent gas mixture content is 51% by weight.

5. A composition according to claim 3 or 4, **characterised in that** the propellent gas mixture consists of 80% by weight of butane and 20% by weight of propane relative to the propellent gas mixture.

6. A composition according to any one of the preceding claims, **characterised by** an addition in the form of a dye which readily oxidises and/or the colour action of which disappears under the action of light and/or heat.

7. A composition according to claim 6, **characterised in that** the addition comprises at least one chromophoric hydrocarbon.

8. A composition according to claim 6, **characterised in that** the addition comprises β-carotene, 1,3-diphenylisobensofuran, azulene, guaiazulene and/or 2-nitrophenol.

9. A composition according to claim 8, **characterised in that** β-carotene is present in a content of 0.1 to 5% by weight of the propellent gas mixture.

10. A composition according to claim 9, **characterised in that** β-carotene is present in a content of 1.5% by weight of the propellent gas mixture.

## Revendications

1. Composition sous forme de charge pour pulvérisateur, destinée à l'impression, à la peinture ou à la pulvérisation, comprenant un hydrocarbure solide, sublimant sous forme de cyclododécane, incorporé dans un agent support sous forme d'un gaz propulseur, dans lequel cas la pression de vaporisation de l'agent support est plus importante que celle de l'hydrocarbure et contenant 1 à 60 % du poids de cyclododécane ainsi que 99 à 40 % du poids de gaz propulseur, qui pour sa part contient du butane, du propane, du méthane, de l'éthane et/ou un mélange de ces substances.

2. Composition selon la revendication 1, **caractérisée en ce que** l'hydrocarbure est sublimant dans une plage de température située entre - 30 ° C et son point de fusion, dans laquelle la pression de vaporisation de l'agent support est plus élevée que celle de l'hydrocarbure.

3. Composition selon l'une quelconque des revendications 1 ou 2, **caractérisée en ce que** la teneur en cyclododécane est de 30 à 50 % du poids et la teneur en mélange de gaz propulseurs est de 70 à 50 % du poids.

4. Composition selon la revendication 3, **caractérisée en ce que** la teneur en cyclododécane est de 49 % du poids et la teneur en mélange de gaz propulseurs est de 51 % du poids.

5. Composition selon l'une quelconque des revendications 3 ou 4, **caractérisée en ce que** le mélange de gaz propulseurs est composé de 80 % de butane et de 20 % de propane, par rapport au poids du mélange de gaz propulseur.

6. Composition selon l'une quelconque des revendications précédentes, **caractérisée par** un additif sous forme d'un colorant qui oxyde facilement et/ou dont l'effet colorant disparaît sous l'influence de la lumière ou de la chaleur.

7. Composition selon la revendication 6, **caractérisée en ce que** l'additif englobe au mois un hydrocarbure chromophore.

8. Composition selon la revendication 6, **caractérisée en ce que** l'additif englobe du β-carotène, 1,3-diphénylisobenzofurane, de l'azulène, du gaiazulène et/ou 2- nitrophénole.

9. Composition selon la revendication 8, **caractérisée en ce que** le β-carotène est présent à une teneur de 0,1 à 5 % du poids du mélange de gaz propulseurs.

10. Composition selon la revendication 9, **caractérisée en ce que** le β-carotène est présent à une teneur de 1,5 % du poids du mélange de gaz propulseurs.
